# EUROPEAN PATENT APPLICATION

(11) **EP 4 632 955 A1**
(43) Date of publication of application: **15.10.2025**
(21) Application number: 25169381.8
(22) Date of filing: 09.04.2025
(51) Int. Cl.: H01R 4/56, H01M 50/502, H01R 11/28, H01R 4/70

(54) **FASTENER, ELECTRICAL CONNECTION MODULE AND CONNECTOR**

(30) Priority: 12.04.2024 CN 202420766578 U
(71) Applicant: Tyco Electronics (Shanghai) Co., Ltd., Pilot Free Trade Zone Shanghai 200131 (CN)
(72) Inventor: Feng, Qi, Shanghai, 200233 (CN); Li, Ziwei, Shanghai, 200233 (CN); Yang, Yuchen, Shanghai, 200233 (CN)
(74) Representative: Grünecker Patent- und Rechtsanwälte PartG mbB

(57) **Abstract**

The present invention discloses a fastener, an electrical connection module and a connector. The fastener (33) has an outer flange (33c) and a threaded hole (33a) located at one end, as well as a screw rod (33b) located at the other end; the screw rod (33b) of the fastener (33) is adapted to pass through a conductive sleeve (32) and be threaded with a conductive terminal (31), and the outer flange (33c) of the fastener (33) is adapted to axially rest on one end of the conductive sleeve (32), so that the fastener (33) can vertically fasten the conductive sleeve (32) to the conductive terminal (31); the threaded hole (33a) of the fastener (33) is suitable for threaded connection with a bolt, so that a mating terminal can be fastened to one end of the conductive sleeve (32) through the bolt. In the present invention, the fastener, the conductive sleeve, and the conductive terminal can be disassembled and assembled, thus requiring less installation space and reducing the size of the connector, achieving miniaturization of the connector. In addition, the connector of the present invention not only has a compact structure, but also has functions such as waterproof sealing, electromagnetic shielding, high-voltage interlocking, and finger protection.

## Description

### CROSS-REFERENCE TO RELATED APPLICATION

This application claims the benefit of Chinese Patent Application No. CN202420766578.7 filed on April 12, 2024 in the State Intellectual Property Office of China, the whole disclosure of which is incorporated herein by reference.

### BACKGROUND OF THE INVENTION

### Field of the Invention

The present invention relates to a fastener, an electrical connection module comprising the fastener and a connector comprising the electrical connection module.

### Description of the Related Art

In the prior art, the connector at the battery pack end typically includes a shielding outer shell, an insulation inner housing, and a metal bar. In applications that require right angle electrical connections, the metal bars need to be bent 90 degrees. The metal bar bent 90 degrees is a single piece that cannot be disassembled and assembled, which requires a large installation space and leads to the connector being too large in size, making it difficult to achieve miniaturization of the connector. In addition, the connectors at the battery pack end in the prior art are difficult to simultaneously possess functions such as waterproof sealing, electromagnetic shielding, high-voltage interlocking, and finger protection.

### SUMMARY OF THE INVENTION

The present invention has been made to overcome or alleviate at least one aspect of the above mentioned disadvantages.

According to an aspect of the present invention, there is provided a fastener. The fastener has an outer flange and a threaded hole located at one end, as well as a screw rod located at the other end. The screw rod of the fastener is adapted to pass through a conductive sleeve and be threaded with a conductive terminal, and the outer flange of the fastener is adapted to axially rest on one end of the conductive sleeve, so that the fastener can vertically fasten the conductive sleeve to the conductive terminal; the threaded hole of the fastener is suitable for threaded connection with a bolt, so that a mating terminal can be fastened to one end of the conductive sleeve through the bolt.

According to an exemplary embodiment of the present invention, the outer flange is formed on the outer peripheral surface of one end of the fastener and is suitable for axial contact with the end face of one end of the conductive sleeve.

According to another exemplary embodiment of the present invention, a circular groove is formed on the outer peripheral surface of one end of the fastener, which is adjacent to the outer flange and closer to the end face of one end of the fastener; the circular groove on the fastener is used to engage with an inner flange of an insulation end cap, so that the insulation end cap can be fixed to one end of the fastener.

According to another exemplary embodiment of the present invention, the fastener also has an operating part suitable for engagement with an operating tool, so as to be able to tighten or loosen the fastener through the operating tool engaged with the operating part; the operating part is located between the outer flange and the circular groove and has a polygonal cross-section.

According to another exemplary embodiment of the present invention, the fastener is cylindrical in shape, and the threaded hole of the fastener extends axially from the end face of one end of the fastener and does not penetrate through the fastener.

According to another aspect of the present invention, there is provided an electrical connection module. The electrical connection module comprises: the above fastener; a conductive terminal, in one end of which a threaded connection hole is formed; and a conductive sleeve for electrically connecting the conductive terminal and a mating terminal. The screw rod of the fastener passes through the conductive sleeve and is threaded into the threaded connection hole of the conductive terminal, the outer flange of the fastener is axially pressed against one end of the conductive sleeve, so that the conductive sleeve is vertically fastened to one end of the conductive terminal, the threaded hole of the fastener is suitable for threaded connection with a bolt, so that the mating terminal can be fastened to one end of the conductive sleeve through the bolt.

According to another exemplary embodiment of the present invention, the end face of one end of the conductive sleeve is suitable for electrical contact with the end face of the mating terminal, so as to achieve electrical connection between the conductive sleeve and the mating terminal; the end face of the other end of the conductive sleeve is in electrical contact with the surface of the conductive terminal to achieve electrical connection between the conductive sleeve and the conductive terminal.

According to another exemplary embodiment of the present invention, the conductive terminal is flat and has two flat surfaces opposite each other in its thickness direction, the end face of the other end of the conductive sleeve is in electrical contact with the flat surface of the conductive terminal.

According to another exemplary embodiment of the present invention, the electrical connection module further comprises an insulation end cap which is installed on one end of the fastener to prevent human fingers from touching one end of the fastener.

According to another exemplary embodiment of the present invention, the insulation end cap has an inner flange that is engaged into the circular groove at one end of the fastener to secure the insulation end cap to one end of the fastener.

According to another exemplary embodiment of the present invention, the conductive terminal and the conductive sleeve are copper components, and the fastener is a steel component.

According to another exemplary embodiment of the present invention, the conductive terminal is flat with a longitudinal direction and a transverse direction, and the axial direction of the conductive sleeve is perpendicular to the longitudinal direction and transverse direction of the conductive terminal.

According to another aspect of the present invention, there is provided a connector. The connector comprises: an outer shielding shell; an insulation inner housing which is provided in the outer shielding shell; and the above electrical connection module which is provided in the insulation inner housing.

According to an exemplary embodiment of the present invention, the insulation inner housing comprises: a first insulation housing which has an insertion cavity and an installation port formed in the top wall of the insertion cavity; and a second insulation housing which has a base and a cylindrical part formed on the base. The base of the second insulation housing is assembled onto the top of the first insulation housing, and the lower end of the cylindrical part of the second insulation housing is inserted into the installation port of the first insulation housing; the conductive terminal of the electrical connection module is inserted into the insertion cavity of the first insulation housing, and the conductive sleeve of the electrical connection module is inserted into the cylindrical part of the second insulation housing.

According to another exemplary embodiment of the present invention, an elastic buckle is formed at the lower end of the cylindrical part of the second insulation housing, and the elastic buckle is joined to the inner edge of the installation port of the first insulation housing to fix the second insulation housing to the first insulation housing.

According to another exemplary embodiment of the present invention, the lower end of the fastener of the electrical connection module is threaded onto the conductive terminal, and the insulation end cap of the electrical connection module is fitted onto the upper end of the fastener to prevent human fingers from contacting the upper end of the fastener.

According to another exemplary embodiment of the present invention, the insulation end cap is located in the cylindrical part of the second insulation housing, and the cylindrical part of the second insulation housing extends upward beyond the upper end of the fastener; a gap between the insulation end cap and the cylindrical part of the second insulation housing is smaller than that of a human finger, so that the human finger cannot be inserted between the insulation end cap and the cylindrical part to prevent the human finger from contacting the conductive sleeve and the conductive terminal.

According to another exemplary embodiment of the present invention, the outer shielding shell comprises a front end wall and a rear port that are opposite in its longitudinal direction, a top opening and a bottom wall that are opposite in its height direction, and two side walls that are opposite in its transverse direction; the first insulation housing is inserted into the outer shielding shell from the rear port of the outer shielding shell, and the base of the second insulation housing is installed in the top opening of the outer shielding shell.

According to another exemplary embodiment of the present invention, multiple positioning slots are formed on the peripheral wall of the top opening of the outer shielding shell, and multiple positioning protrusions are formed on the outer peripheral surface of the base of the second insulation housing, the multiple positioning protrusions are respectively engaged in the multiple positioning slots to support and position the second insulation housing in the top opening of the outer shielding shell.

According to another exemplary embodiment of the present invention, the connector comprises two electrical connection modules arranged side by side in the transverse direction of the outer shielding shell; two insertion cavities arranged side by side in the transverse direction are formed in the first insulation housing, and the conductive terminals of the two electrical connection modules are respectively inserted into the two insertion cavities; two cylindrical parts arranged side by side in the transverse direction are formed on the second insulation housing, and the conductive sleeves of the two electrical connection modules are respectively inserted into the two cylindrical parts.

According to another exemplary embodiment of the present invention, the connector further comprises a detection module which is installed in the insulation inner housing and located between the two electrical connection modules, for mating with a mating detection module of a mating connector; after the connector is mated with the mating connector, the conductive terminal of the connector is electrically connected to the mating terminal of the mating connector to connect a high-voltage load circuit; after the connector is mated with the mating connector, the detection module is mated with the mating detection module to connect a low-voltage control circuit and control a power supply to supply power to the high-voltage load circuit through the low-voltage control circuit.

According to another exemplary embodiment of the present invention, mounting holes are respectively formed in the top wall of the first insulation housing and the base of the second insulation housing. The detection module comprises: an insulation retaining body which is inserted into the mounting holes of the first insulation housing and the second insulation housing; two detection terminals which are provided in the insulation retaining body; and two connecting wires which are electrically connected to the two detection terminals respectively. A socket is formed in the first insulation housing, and the two connecting wires are led out from the socket of the first insulation housing for electrical connection to the low-voltage control circuit.

According to another exemplary embodiment of the present invention, the outer shielding shell has a flange part formed on its rear end, which is used for installation on an installation panel and has a sealing ring installation groove formed on the flange part; the connector further comprises a sealing ring installed in the sealing ring installation groove, wherein the sealing ring is adapted to be axially compressed between the flange part and the installation panel to achieve sealing between the two.

According to another exemplary embodiment of the present invention, the installation panel is an outer shell of a device, and the conductive terminal and the connecting wire are led out from the rear port of the outer shielding shell for electrical connection to the high-voltage load circuit and the low-voltage control circuit inside the device, respectively.

According to another exemplary embodiment of the present invention, the device is a battery pack, and the conductive terminal and the connecting wire are led out from the rear port of the outer shielding shell for electrical connection to a charging battery and a control unit inside the battery pack, respectively.

In the aforementioned exemplary embodiments according to the present invention, the fastener, the conductive sleeve, and the conductive terminal can be disassembled and assembled, thus requiring less installation space and reducing the size of the connector, achieving miniaturization of the connector.

In addition, in the aforementioned exemplary embodiments of the present invention, the connector not only has a compact structure, but also has functions such as waterproof sealing, electromagnetic shielding, high-voltage interlocking, and finger protection.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a connector according to an exemplary embodiment of the present invention;
Figure 2 shows a longitudinal sectional view of a connector according to an exemplary embodiment of the present invention;
Figure 3 shows an illustrative perspective view of the outer shielding shell of a connector according to an exemplary embodiment of the present invention;
Figure 4 shows another longitudinal sectional view of a connector according to an exemplary embodiment of the present invention;
Figure 5 shows a longitudinal sectional view of a connector according to an exemplary embodiment of the present invention, where the outer shielding shell is not shown;
Figure 6 shows an illustrative perspective view of an electrical connection module of a connector according to an exemplary embodiment of the present invention;
Figure 7 shows a cross-sectional view of an electrical connection module of a connector according to an exemplary embodiment of the present invention; and
Figure 8 shows an illustrative exploded view of the electrical connection module of a connector according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a fastener. The fastener has an outer flange and a threaded hole located at one end, as well as a screw rod located at the other end. The screw rod of the fastener is adapted to pass through a conductive sleeve and be threaded with a conductive terminal, and the outer flange of the fastener is adapted to axially rest on one end of the conductive sleeve, so that the fastener can vertically fasten the conductive sleeve to the conductive terminal; the threaded hole of the fastener is suitable for threaded connection with a bolt, so that a mating terminal can be fastened to one end of the conductive sleeve through the bolt.

According to another general concept of the present invention, there is provided an electrical connection module. The electrical connection module comprises: the above fastener; a conductive terminal, in one end of which a threaded connection hole is formed; and a conductive sleeve for electrically connecting the conductive terminal and a mating terminal. The screw rod of the fastener passes through the conductive sleeve and is threaded into the threaded connection hole of the conductive terminal, the outer flange of the fastener is axially pressed against one end of the conductive sleeve, so that the conductive sleeve is vertically fastened to one end of the conductive terminal, the threaded hole of the fastener is suitable for threaded connection with a bolt, so that the mating terminal can be fastened to one end of the conductive sleeve through the bolt.

According to another general concept of the present invention, there is provided a connector. The connector comprises: an outer shielding shell; an insulation inner housing which is provided in the outer shielding shell; and the above electrical connection module which is provided in the insulation inner housing.

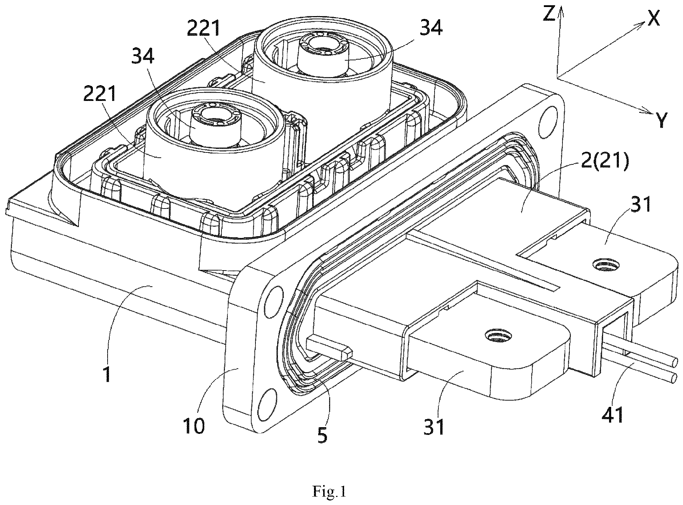

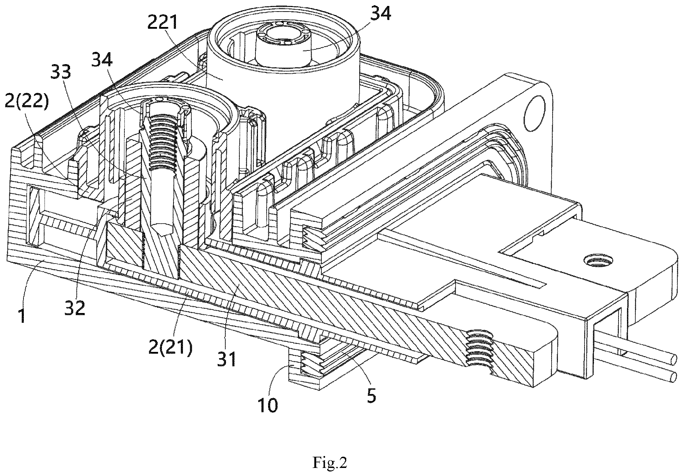

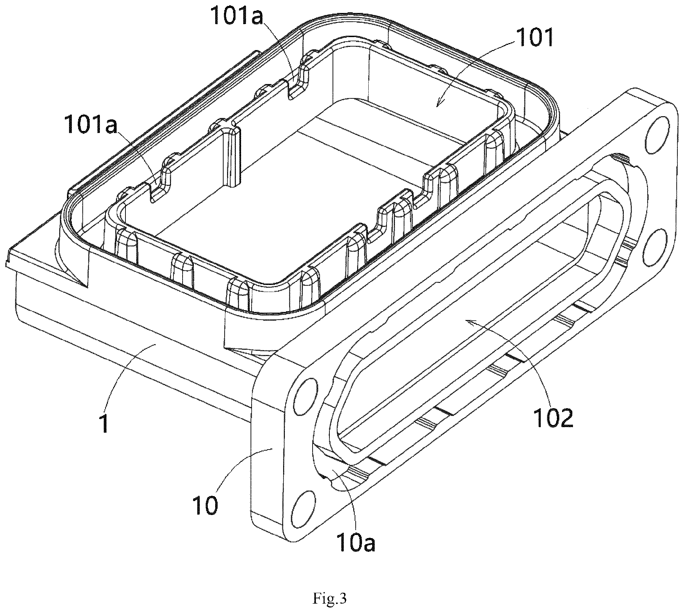

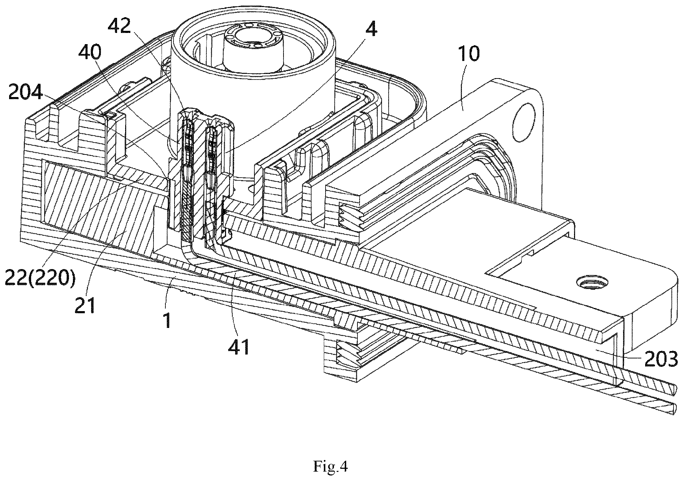

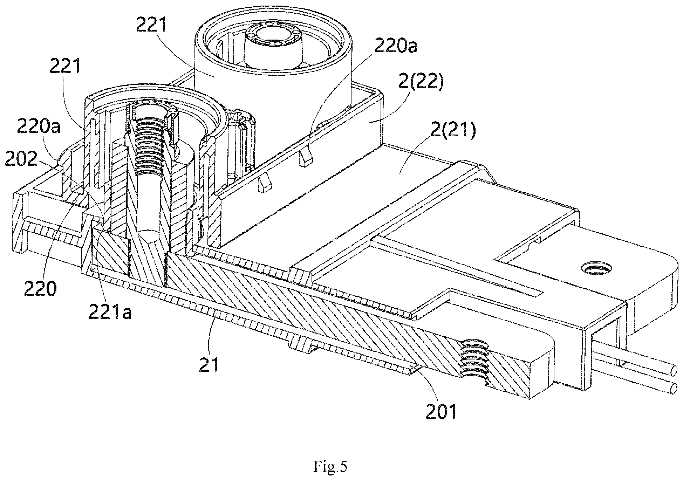

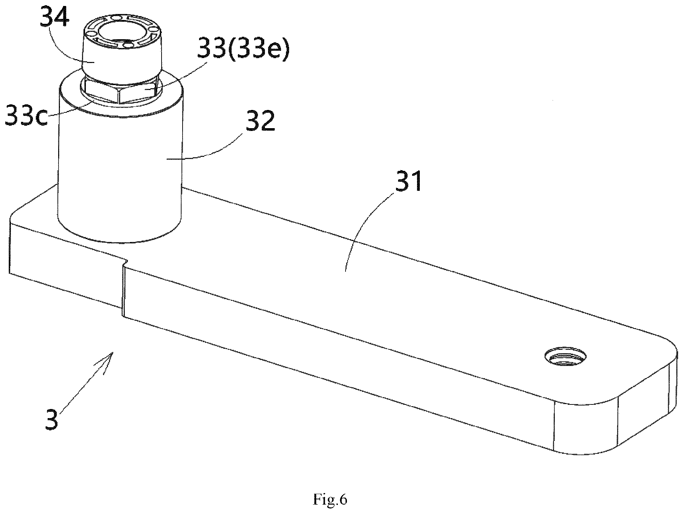

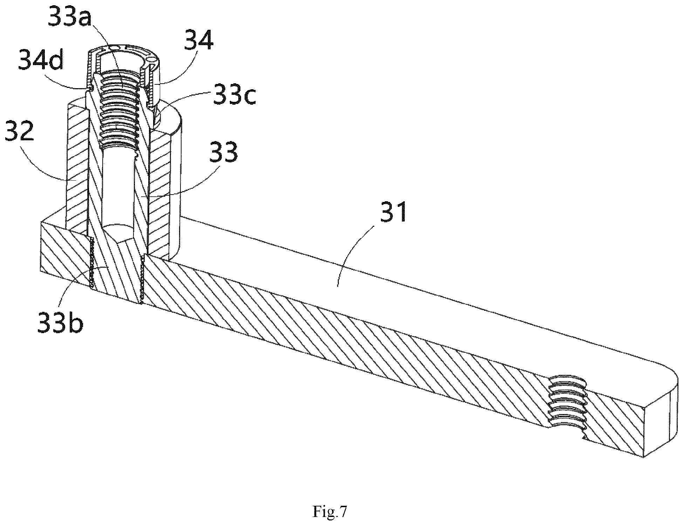

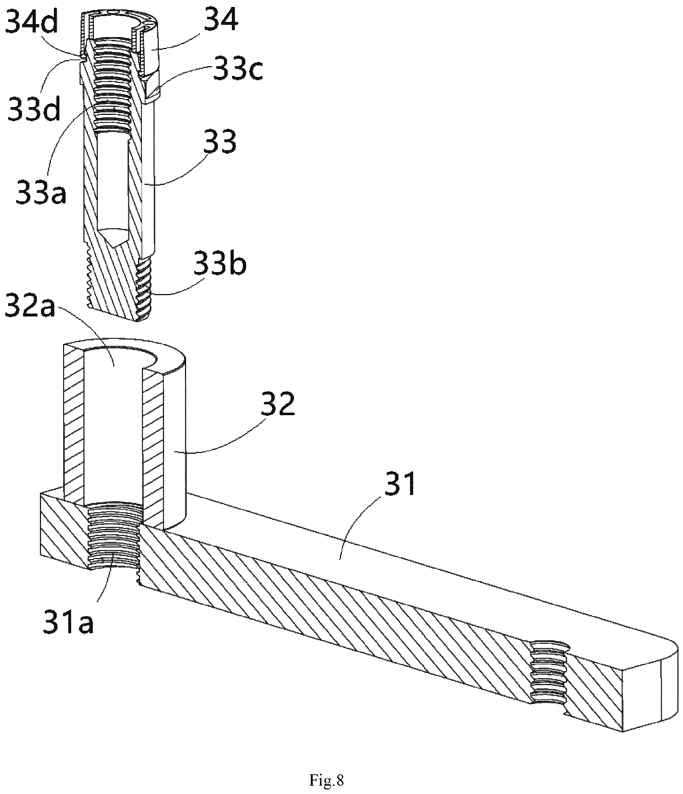

Figure 1 shows an illustrative perspective view of a connector according to an exemplary embodiment of the present invention; Figure 2 shows a longitudinal sectional view of a connector according to an exemplary embodiment of the present invention; Figure 3 shows an illustrative perspective view of the outer shielding shell 1 of a connector according to an exemplary embodiment of the present invention; Figure 4 shows another longitudinal sectional view of a connector according to an exemplary embodiment of the present invention; Figure 5 shows a longitudinal sectional view of a connector according to an exemplary embodiment of the present invention, where the outer shielding shell 1 is not shown; Figure 6 shows an illustrative perspective view of the electrical connection module 3 of a connector according to an exemplary embodiment of the present invention; Figure 7 shows a cross-sectional view of the electrical connection module 3 of a connector according to an exemplary embodiment of the present invention; Figure 8 shows an illustrative exploded view of the electrical connection module 3 of a connector according to an exemplary embodiment of the present invention.

As shown in Figures 1 to 8, in an exemplary embodiment of the present invention, a fastener 33 is disclosed. The fastener 33 has an outer flange 33c and a threaded hole 33a located at one end, as well as a screw rod 33b located at the other end. The screw rod 33b of the fastener 33 is adapted to pass through the conductive sleeve 32 and be threaded with the conductive terminal 31, and the outer flange 33c of the fastener 33 is adapted to axially rest on one end of the conductive sleeve 32, so that the fastener 33 can vertically fasten the conductive sleeve 32 to the conductive terminal 31. The threaded hole 33a of fastener 33 is suitable for threaded connection with a bolt (not shown), so that a mating terminal (not shown) can be fastened to one end of the conductive sleeve 32 through the bolt.

As shown in Figures 1 to 8, in the illustrated embodiment, the outer flange 33c is formed on the outer peripheral surface of one end of the fastener 33 and is adapted to axially rest on the end face of the conductive sleeve 32. The outer flange 33c surrounds the peripheral part of the central through-hole 12a of conductive sleeve 32.

As shown in Figures 1 to 8, in the illustrated embodiment, a circular groove 33d is formed on the outer peripheral surface of one end of the fastener 33, which is adjacent to the outer flange 33c and closer to the end face of one end of the fastener 33. The circular groove 33d on the fastener 33 is used to engage with an inner flange 34d of the insulation end cap 34, so that the insulation end cap 34 can be fixed to one end of the fastener 33.

As shown in Figures 1 to 8, in the illustrated embodiment, the fastener 33 also has an operating part 33e suitable for engagement with an operating tool, so that the fastener 33 can be tightened or loosened by the operating tool engaged with the operating part 33e. The operating part 33e is located between the outer flange 33c and the circular groove 33d, and its cross-section is polygonal.

As shown in Figures 1 to 8, in the illustrated embodiment, the fastener 33 is cylindrical, and the threaded hole 33a of the fastener 33 extends axially from the end face of one end of the fastener 33 and does not penetrate through the fastener 33.

As shown in Figures 1 to 8, in another exemplary embodiment of the present invention, an electrical connection module 3 is also disclosed. The electrical connection module 3 includes a fastener 33, a conductive terminal 31, and a conductive sleeve 32. A threaded connection hole 31a is formed in one end of the conductive terminal 31. The conductive sleeve 32 is used to electrically connect the conductive terminal 31 and a mating terminal (not shown). The screw rod 33b of the fastener 33 passes through the conductive sleeve 32 and is threaded into the threaded connection hole 31a of the conductive terminal 31. The outer flange 33c of the fastener 33 is axially pressed against one end of the conductive sleeve 32, so that the conductive sleeve 32 is vertically fastened to one end of the conductive terminal 31. The threaded hole 33a of the fastener 33 is suitable for threaded connection with a bolt (not shown), allowing the mating terminal (not shown) to be fastened to one end of the conductive sleeve 32 through the bolt.

As shown in Figures 1 to 8, in the illustrated embodiment, the end face of one end of the conductive sleeve 32 is adapted to make electrical contact with the end face of the mating terminal, so as to achieve electrical connection between the conductive sleeve 32 and the mating terminal. The end face of the other end of the conductive sleeve 32 is in electrical contact with the surface of the conductive terminal 31 to achieve electrical connection between the conductive sleeve 32 and the conductive terminal 31.

As shown in Figures 1 to 8, in the illustrated embodiment, the conductive terminal 31 is flat and has two flat surfaces opposite each other in its thickness direction. The end face of the other end of the conductive sleeve 32 is in electrical contact with the flat surface of the conductive terminal 31.

As shown in Figures 1 to 8, in the illustrated embodiment, the electrical connection module 3 further includes an insulation end cap 34, which is installed on one end of the fastener 33 to prevent human fingers from touching one end of the fastener 33.

As shown in Figures 1 to 8, in the illustrated embodiment, the insulation end cap 34 has an inner flange 34d, which is engaged into the circular groove 33d at one end of the fastener 33 to fix the insulation end cap 34 to one end of the fastener 33.

As shown in Figures 1 to 8, in the illustrated embodiment, the conductive terminal 31 and the conductive sleeve 32 are copper components, and the fastener 33 is a steel component.

As shown in Figures 1 to 8, in the illustrated embodiment, the conductive terminal 31 is flat with a longitudinal direction Y and a transverse direction X, and the axial direction of the conductive sleeve 32 is perpendicular to the longitudinal direction Y and the transverse direction X of the conductive terminal 31.

As shown in Figures 1 to 8, in another exemplary embodiment of the present invention, a connector is also disclosed. The connector includes an outer shielding shell 1, an insulation inner housing 2, and the aforementioned electrical connection module 3. The insulation inner housing 2 is set in the outer shielding shell 1. The electrical connection module 3 is set in the insulation inner housing 2.

As shown in Figures 1 to 8, in the illustrated embodiment, the insulation inner housing 2 includes a first insulation housing 21 and a second insulation housing 22. The first insulation housing 21 has an insertion cavity 201 and an installation port 202 formed in the top wall of the insertion cavity 201. The second insulation housing 22 has a base 220 and a cylindrical part 221 formed on the base 220. The base 220 of the second insulation housing 22 is assembled onto the top of the first insulation housing 21, and the lower end of the cylindrical part 221 of the second insulation housing 22 is inserted into the installation port 202 of the first insulation housing 21. The conductive terminal 31 of the electrical connection module 3 is inserted into the insertion cavity 201 of the first insulation housing 21, and the conductive sleeve 32 of the electrical connection module 3 is inserted into the cylindrical part 221 of the second insulation housing 22.

As shown in Figures 1 to 8, in the illustrated embodiment, an elastic buckle 221a is formed at the lower end of the cylindrical part 221 of the second insulation housing 22. The elastic buckle 221a is joined to the inner edge of the installation port 202 of the first insulation housing 21 to fix the second insulation housing 22 to the first insulation housing 21.

As shown in Figures 1 to 8, in the illustrated embodiment, the lower end of the fastener 33 of the electrical connection module 3 is threaded to the conductive terminal 31, and the insulation end cap 34 of the electrical connection module 3 is fitted onto the upper end of the fastener 33 to prevent human fingers from contacting the upper end of the fastener 33.

As shown in Figures 1 to 8, in the illustrated embodiment, the insulation end cap 34 is located in the cylindrical part 221 of the second insulation housing 22, and the cylindrical part 221 of the second insulation housing 22 extends upward beyond the upper end of the fastener 33. The gap between the insulation end cap 34 and the cylindrical part 221 of the second insulation housing 22 is smaller than that of a human finger, so that the human finger cannot be inserted between the insulation end cap 34 and the cylindrical part 221 to prevent the human finger from contacting the conductive sleeve 32 and the conductive terminal 31.

As shown in Figures 1 to 8, in the illustrated embodiment, the outer shielding shell 1 includes a front end wall and a rear port 102 that are opposite in its longitudinal direction Y, a top opening 101 and a bottom wall that are opposite in its height direction Z, and two side walls that are opposite in its transverse direction X. The first insulation housing 21 is inserted into the outer shielding shell 1 from the rear port 102, and the base 220 of the second insulation housing 22 is installed in the top opening 101 of the outer shielding shell 1.

As shown in Figures 1 to 8, in the illustrated embodiment, multiple positioning slots 101a are formed on the peripheral wall of the top opening 101 of the outer shielding shell 1, and multiple positioning protrusions 220a are formed on the outer peripheral surface of the base 220 of the second insulation housing 22. The multiple positioning protrusions 220a are respectively engaged in the multiple positioning slots 101a to support and position the second insulation housing 22 in the top opening 101 of the outer shielding shell 1.

As shown in Figures 1 to 8, in the illustrated embodiment, the connector comprises two electrical connection modules 3, which are arranged side by side in the transverse direction X of the outer shielding shell 1. Two insertion cavities 201 arranged side by side in the transverse direction X are formed in the first insulation housing 21, and the conductive terminals 31 of the two electrical connection modules 3 are respectively inserted into the two insertion cavities 201. Two cylindrical parts 221 arranged side by side in the transverse direction X are formed on the second insulation housing 22, and the conductive sleeves 32 of the two electrical connection modules 3 are respectively inserted into the two cylindrical parts 221.

As shown in Figures 1 to 8, in the illustrated embodiment, the connector further comprises a detection module 4, which is installed in the insulation inner housing 2 and located between two electrical connection modules 3, for mating with a mating detection module (not shown) of a mating connector (not shown).

As shown in Figures 1 to 8, in the illustrated embodiment, after the connector is mated with the mating connector, the conductive terminal 31 of the connector is electrically connected to the mating terminal of the mating connector to connect a high-voltage load circuit (not shown).

As shown in Figures 1 to 8, in the illustrated embodiment, after the connector is mated with the mating connector, the detection module 4 is mated with the mating detection module to connect a low-voltage control circuit and control a power supply (not shown) to supply power to the high-voltage load circuit through the low-voltage control circuit. After the connector is separated from the mating connector, the detection module 4 is separated from the mating detection module, the low-voltage control circuit is disconnected, and the power supply is controlled to stop supplying power to the high-voltage load circuit.

As shown in Figures 1 to 8, in the illustrated embodiment, mounting holes 204 are formed in the top wall of the first insulation housing 21 and the base 220 of the second insulation housing 22, respectively. The detection module 4 includes an insulation retaining body 40, two detection terminals 42, and two connecting wires 41. The insulation retaining body 40 is inserted into the mounting holes 204 of the first insulation housing 21 and the second insulation housing 22. Two detection terminals 42 are set in the insulation retaining body 40. Two connecting wires 41 are electrically connected to two detection terminals 42, respectively. A socket 203 is formed in the first insulation housing 21, and two connecting wires 41 are led out from the socket 203 of the first insulation housing 21 for electrical connection to the low-voltage control circuit.

As shown in Figures 1 to 8, in the illustrated embodiment, the outer shielding shell 1 has a flange part 10 formed on its rear end, which is used for installation on an installation panel and has a sealing ring installation groove 10a formed on the flange part 10. The connector also includes a sealing ring 5 installed in the sealing ring installation groove 10a, which is suitable for being axially compressed between the flange part 10 and the installation panel to achieve sealing between the two.

As shown in Figures 1 to 8, in the illustrated embodiment, the installation panel is an outer shell of a device, and the conductive terminals 31 and connecting wires 41 are led out from the rear port 102 of the outer shielding shell 1, for electrical connection to the high-voltage load circuit and low-voltage control circuit inside the device, respectively.

As shown in Figures 1 to 8, in an exemplary embodiment of the present invention, the aforementioned device can be a battery pack. The conductive terminal 31 and the connecting wire 41 are led out from the rear port 102 of the outer shielding shell 1 for electrical connection to the charging battery and the control unit inside the battery pack, respectively.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A fastener, wherein the fastener (33) has an outer flange (33c) and a threaded hole (33a) located at one end, as well as a screw rod (33b) located at the other end;
wherein the screw rod (33b) of the fastener (33) is adapted to pass through a conductive sleeve (32) and be threaded with a conductive terminal (31), and the outer flange (33c) of the fastener (33) is adapted to axially rest on one end of the conductive sleeve (32), so that the fastener (33) can vertically fasten the conductive sleeve (32) to the conductive terminal (31);
wherein the threaded hole (33a) of the fastener (33) is suitable for threaded connection with a bolt, so that a mating terminal can be fastened to one end of the conductive sleeve (32) through the bolt.

2. The fastener according to claim 1,
wherein the outer flange (33c) is formed on the outer peripheral surface of one end of the fastener (33) and is suitable for axial contact with the end face of one end of the conductive sleeve (32).

3. The fastener according to claim 1,
wherein a circular groove (33d) is formed on the outer peripheral surface of one end of the fastener (33), which is adjacent to the outer flange (33c) and closer to the end face of one end of the fastener (33);
wherein the circular groove (33d) on the fastener (33) is used to engage with an inner flange (34d) of an insulation end cap (34), so that the insulation end cap (34) can be fixed to one end of the fastener (33).

4. The fastener according to claim 3,
wherein the fastener (33) also has an operating part (33e) suitable for engagement with an operating tool, so as to be able to tighten or loosen the fastener (33) through the operating tool engaged with the operating part (33e);
wherein the operating part (33e) is located between the outer flange (33c) and the circular groove (33d) and has a polygonal cross-section.

5. The fastener according to claim 1,
wherein the fastener (33) is cylindrical in shape, and the threaded hole (33a) of the fastener (33) extends axially from the end face of one end of the fastener (33) and does not penetrate through the fastener (33).

6. An electrical connection module, comprising:
the fastener (33) according to any one of claims 1-5;
a conductive terminal (31), in one end of which a threaded connection hole (31a) is formed; and
a conductive sleeve (32) for electrically connecting the conductive terminal (31) and a mating terminal,
wherein the screw rod (33b) of the fastener (33) passes through the conductive sleeve (32) and is threaded into the threaded connection hole (31a) of the conductive terminal (31), the outer flange (33c) of the fastener (33) is axially pressed against one end of the conductive sleeve (32), so that the conductive sleeve (32) is vertically fastened to one end of the conductive terminal (31),
wherein the threaded hole (33a) of the fastener (33) is suitable for threaded connection with a bolt, so that the mating terminal can be fastened to one end of the conductive sleeve (32) through the bolt.

7. The electrical connection module according to claim 6,
wherein the end face of one end of the conductive sleeve (32) is suitable for electrical contact with the end face of the mating terminal, so as to achieve electrical connection between the conductive sleeve (32) and the mating terminal;
wherein the end face of the other end of the conductive sleeve (32) is in electrical contact with the surface of the conductive terminal (31) to achieve electrical connection between the conductive sleeve (32) and the conductive terminal (31);
wherein the conductive terminal (31) is flat and has two flat surfaces opposite each other in its thickness direction, the end face of the other end of the conductive sleeve (32) is in electrical contact with the flat surface of the conductive terminal (31).

8. The electrical connection module according to claim 6, further comprising:
an insulation end cap (34) which is installed on one end of the fastener (33) to prevent human fingers from touching one end of the fastener (33),
wherein the insulation end cap (34) has an inner flange (34d) that is engaged into the circular groove (33d) at one end of the fastener (33) to secure the insulation end cap (34) to one end of the fastener (33).

9. The electrical connection module according to claim 6,
wherein the conductive terminal (31) and the conductive sleeve (32) are copper components, and the fastener (33) is a steel component.

10. The electrical connection module according to any one of claims 6-9,
wherein the conductive terminal (31) is flat with a longitudinal direction (Y) and a transverse direction (X), and the axial direction of the conductive sleeve (32) is perpendicular to the longitudinal direction (Y) and transverse direction (X) of the conductive terminal (31).

11. A connector, comprising:
an outer shielding shell (1);
an insulation inner housing (2) which is provided in the outer shielding shell (1); and
the electrical connection module (3) according to any one of claims 6-9, which is provided in the insulation inner housing (2).

12. The connector according to claim 11,
wherein the insulation inner housing (2) comprises:
a first insulation housing (21) which has an insertion cavity (201) and an installation port (202) formed in the top wall of the insertion cavity (201); and
a second insulation housing (22) which has a base (220) and a cylindrical part (221) formed on the base (220),
wherein the base (220) of the second insulation housing (22) is assembled onto the top of the first insulation housing (21), and the lower end of the cylindrical part (221) of the second insulation housing (22) is inserted into the installation port (202) of the first insulation housing (21),
wherein the conductive terminal (31) of the electrical connection module (3) is inserted into the insertion cavity (201) of the first insulation housing (21), and the conductive sleeve (32) of the electrical connection module (3) is inserted into the cylindrical part (221) of the second insulation housing (22).

13. The connector according to claim 12,
wherein an elastic buckle (221a) is formed at the lower end of the cylindrical part (221) of the second insulation housing (22), and the elastic buckle (221a) is joined to the inner edge of the installation port (202) of the first insulation housing (21) to fix the second insulation housing (22) to the first insulation housing (21).

14. The connector according to claim 12,
wherein the lower end of the fastener (33) of the electrical connection module (3) is threaded onto the conductive terminal (31), and the insulation end cap (34) of the electrical connection module (3) is fitted onto the upper end of the fastener (33) to prevent human fingers from contacting the upper end of the fastener (33);
wherein the insulation end cap (34) is located in the cylindrical part (221) of the second insulation housing (22), and the cylindrical part (221) of the second insulation housing (22) extends upward beyond the upper end of the fastener (33);
wherein a gap between the insulation end cap (34) and the cylindrical part (221) of the second insulation housing (22) is smaller than that of a human finger, so that the human finger cannot be inserted between the insulation end cap (34) and the cylindrical part (221) to prevent the human finger from contacting the conductive sleeve (32) and the conductive terminal (31).

15. The connector according to claim 12,
wherein the outer shielding shell (1) comprises a front end wall and a rear port (102) that are opposite in its longitudinal direction (Y), a top opening (101) and a bottom wall that are opposite in its height direction (Z), and two side walls that are opposite in its transverse direction (X);
wherein the first insulation housing (21) is inserted into the outer shielding shell (1) from the rear port (102) of the outer shielding shell (1), and the base (220) of the second insulation housing (22) is installed in the top opening (101) of the outer shielding shell (1);
wherein multiple positioning slots (101a) are formed on the peripheral wall of the top opening (101) of the outer shielding shell (1), and multiple positioning protrusions (220a) are formed on the outer peripheral surface of the base (220) of the second insulation housing (22), the multiple positioning protrusions (220a) are respectively engaged in the multiple positioning slots (101a) to support and position the second insulation housing (22) in the top opening (101) of the outer shielding shell (1).

16. The connector according to claim 15,
wherein the connector comprises two electrical connection modules (3) arranged side by side in the transverse direction (X) of the outer shielding shell (1);
wherein two insertion cavities (201) arranged side by side in the transverse direction (X) are formed in the first insulation housing (21), and the conductive terminals (31) of the two electrical connection modules (3) are respectively inserted into the two insertion cavities (201);
wherein two cylindrical parts (221) arranged side by side in the transverse direction (X) are formed on the second insulation housing (22), and the conductive sleeves (32) of the two electrical connection modules (3) are respectively inserted into the two cylindrical parts (221).

17. The connector according to claim 16, further comprising:
a detection module (4) which is installed in the insulation inner housing (2) and located between the two electrical connection modules (3), for mating with a mating detection module of a mating connector,
wherein after the connector is mated with the mating connector, the conductive terminal (31) of the connector is electrically connected to the mating terminal of the mating connector to connect a high-voltage load circuit;
wherein after the connector is mated with the mating connector, the detection module (4) is mated with the mating detection module to connect a low-voltage control circuit and control a power supply to supply power to the high-voltage load circuit through the low-voltage control circuit.

18. The connector according to claim 17,
wherein mounting holes (204) are respectively formed in the top wall of the first insulation housing (21) and the base (220) of the second insulation housing (22),
wherein the detection module (4) comprises:
an insulation retaining body (40) which is inserted into the mounting holes (204) of the first insulation housing (21) and the second insulation housing (22);
two detection terminals (42) which are provided in the insulation retaining body (40); and
two connecting wires (41) which are electrically connected to the two detection terminals (42) respectively,
wherein a socket (203) is formed in the first insulation housing (21), and the two connecting wires (41) are led out from the socket (203) of the first insulation housing (21) for electrical connection to the low-voltage control circuit.

19. The connector according to any one of claims 15-18,
wherein the outer shielding shell (1) has a flange part (10) formed on its rear end, which is used for installation on an installation panel and has a sealing ring installation groove (10a) formed on the flange part (10);
wherein the connector further comprises a sealing ring (5) installed in the sealing ring installation groove (10a), wherein the sealing ring (5) is adapted to be axially compressed between the flange part (10) and the installation panel to achieve sealing between the two.
